# EUROPEAN PATENT APPLICATION

(11) **EP 2 017 693 A2**
(43) Date of publication of application: **21.01.2009**
(21) Application number: 08104743.3
(22) Date of filing: 14.07.2008
(51) Int. Cl.: G06F 1/32

(54) **User selectable run-time for display device and method of reducing power consumption for display device**

(30) Priority: 13.07.2007 US 826317; 08.08.2007 CN 200710075549
(71) Applicant: TTE Indianapolis, 46290 Indiana, Indianapolis (US)
(72) Inventor: Hoffman, Brent William, Indiana, IN 46158 (US); Rumreich, Mark Francis, Indianapolis, IN 46236 (US)
(74) Representative: Mohun, Stephen John

(57) **Abstract**

A portable display device includes at least one power input port, a battery power supply, an image display region powered by one of the at least one power input port and the battery power supply, a control system for determining receipt of external power by the at least one power input port and for determining current capacity of the battery power supply, and a selection system for selecting a run-time period for displaying images within the image display region, wherein the control system provides a first control signal to the selection system for the selection system to provide a user with a maximum available run-time period based upon the determined receipt of the external power and the determined current capacity of the battery power supply.

## Description

### BACKGROUND OF THE INVENTION

### FIELD OF THE INVENTION

The present invention relates to a portable display device. More specifically, the present invention relates to a portable display device capable of having a selectable run-time and a method of reducing power consumption of a portable display device.

### DISCUSSION OF THE RELATED ART

In general, portable display devices are operated using batteries, and therefore, have a limited run-time. Although many different techniques have been developed to extend the run-time of the portable display device, most techniques usually degrade the image quality produced by the display device in order to extend the run-time of the display device. For example, by reducing the brightness of a display device, the battery life may be extended, thereby providing more run-time of the display device.

Commonly, a portable display device is configured having a power-conserving mode when operated from battery power. However, the power-conserving mode is fixed and does not allow a user to preselect a run-time of the portable display device. Accordingly, the user has no convenient way to know when the portable display device will cease operating, and must simply wait until the display device stops working. Thus, a system is required that provides the user the freedom to select a run-time of a portable display device.

### SUMMARY OF THE INVENTION

Accordingly, the present invention is directed to a portable display device and a method of operating a portable display device that substantially obviates one or more of the problems due to limitations and disadvantages of the related art.

An object of the present invention is to provide a portable display device that allows a user to select a run-time for display images.

Another object of the present invention is to provide a method for operating a portable display device to allow a user to select a run-time for display images.

Another object of the present invention is to provide a method of reducing power consumption of a portable display device.

Additional features and advantages of the invention will be set forth in the description which follows and in part will be apparent from the description, or may be learned by practice of the invention. The objectives and other advantages of the invention will be realized and attained by the structure particularly pointed out in the written description and claims hereof as well as the appended drawings.

To achieve these and other advantages and in accordance with the purpose of the present invention, as embodied and broadly described, a portable display device includes at least one power input port, a battery power supply, an image display region powered by one of the at least one power input port and the battery power supply, a control system for determining receipt of external power by the at least one power input port and for determining current capacity of the battery power supply, and a selection system for selecting a run-time period for displaying images within the image display region, wherein the control system provides a first control signal to the selection system for the selection system to provide a user with a maximum available run-time period based upon the determined receipt of the external power and the determined current capacity of the battery power supply.

In another aspect, a method of operating a portable display device includes powering an image display region by one of at least one power input port and a battery power supply, determining one of receipt of external power by the at least one power input port and current capacity of the battery power supply, and selecting a run-time period for displaying images within the image display region, wherein a user is provided with a display showing a maximum available run-time period based upon the determining one of receipt of external power and current capacity of the battery power supply.

In another aspect, a method of reducing power consumption of portable display device includes powering an image display panel with a battery power supply, determining current capacity of the battery power supply, and selecting a run-time period for displaying images within the image display region based upon the determined current capacity of the battery power supply.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiments of the invention and together with the description serve to explain the principles of the invention. In the drawings:

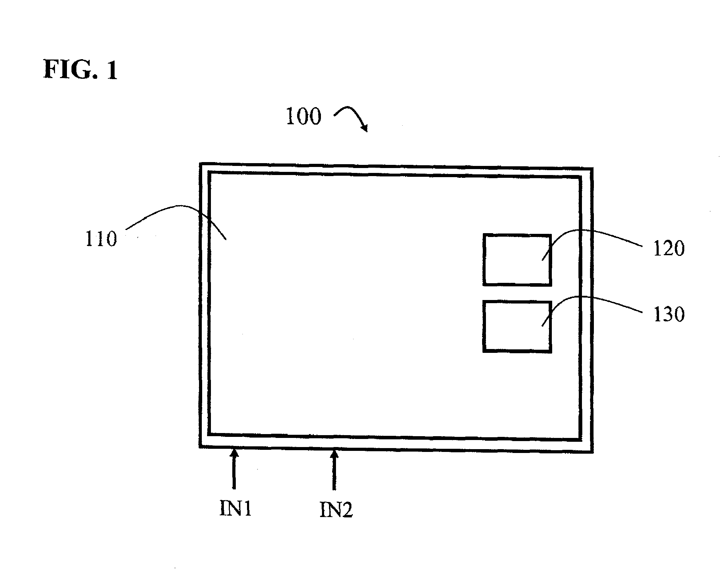

FIG. 1 is a schematic view of an exemplary display device according to the present invention.

### DETAILED DESCRIPTION OF THE PREFERRED EMBODIMENTS

Reference will now be made in detail to the illustrated embodiments of the present invention, examples of which are illustrated in the accompanying drawings.

FIG. 1 is a schematic view of an exemplary display device according to the present invention. In FIG. 1, a display device 100 may have a plurality of external power supply inputs IN1 and IN2 and an image display panel/region 110. Here, the external power supply inputs IN1 and IN2 may include AC or DC power supply inputs. Although not shown, the display device 100 may have various signal input ports to provide image data, such as video signals.

In FIG. 1, when the display device 100 is operated from an AC power supply via one of the external power supply inputs IN1 and IN2, the display device 100 may function in full-power mode. Specifically, since the AC power supply provides a virtually unlimited amount of power to operate the display device 100, a user does not have to be concerned with a run-time of the display device 100. Accordingly, each of the individual operational systems of the display device 100, such as brightness, volume, color, tint, contrast, etc., may be enabled to operate at optimum performance levels.

However, when the display device 100 is operated from an external battery power supply via one of the power supply inputs IN1 and IN2, or by an internal rechargeable battery (not shown), the display device 100 may function in a partial-power mode. Specifically, since the battery power supply provides a limited amount of power to operate the display device 100, a user may determine and select a desired run-time of the display device 100 using a selection system 120. Here, the selection system 120 may include an on-screen display for a user to provide an input of the desired run-time of the display device 100. For example, the user may select a maximum run-time of the display device 100, wherein a control system 130 may determine (and show) a maximum available run-time based upon a current capacity of the battery power supply and/or a lowest possible energy consuming mode available to operate the display device 100. Accordingly, once the desired run-time is selected by the user, the control system 130 may determine the current capacity of the battery power supply, and then supply appropriate control signals to the display device 100 to ensure that the battery power supply may provide sufficient power to the display device 100 during the selected run-time.

In addition, the control system 130 may control the selection system based upon the determined current capacity of the battery power supply in order to limit the selectability of run-time ranges from the selection system 120. Here, the selection system 120 may not provide the user with certain selectable ranges of run-time if the control system 130 determines that the current capacity of the battery power supply is below certain run-time ranges. For example, if the current capacity of the battery power supply is determined to be 45 minutes by the system 130, then the control system 130 would not provide the user with any selectable ranges greater than 45 minutes.

The control signals provided by the control system 130 may control various operational parameters of the display device 100. Here, the control signals may control any one or more of brightness, volume, color, tint, contrast, etc. For example, if the control system 130 determines that during the user selected run-time of 30 minutes, the current capacity of the battery power supply may not be sufficient, then the control system 130 may send signals to reduce the brightness or volume in order to continuously display images on the image display region 110 during the selected run-time.

In FIG. 1, the selection system 120 may further display functional operations of the display device 100 to the user on the image display region 110 during operation of the display device 100. For example, the displayed functional operations may include remaining time of the selected run-time, percentage or actual numerical values of the current capacity of the battery power supply, and/or percentage or actual numerical values of the reduction of any of the controlled operational parameters. In addition, the control system 130 may offer the user an opportunity to extend the run-time of the display device 110 while viewing images on the display device by displaying various messages on the image display region 110 and/or the selection system 120 based upon the current capacity of the battery power supply. For example, if the control system 130 determines that, based upon the user selected run-time and the determined current capacity of the battery power supply, a longer run-time may be available if the performance of some of the operational parameters may be reduced, then the selection system 120 may be instructed to display a message to the user, such as "REDUCING VOLUME BY 50% WILL ADD 4 MINUTES" or "REDUCING BRIGHTNESS BY 30% WILL ADD 8 MINUTES."

It will be apparent to those skilled in the art that various modifications and variations can be made in the user selectable run-time for display devices and method of reducing power consumption for display devices of the present invention without departing from the spirit or scope of the inventions. Thus, it is intended that the present invention covers the modifications and variations of this invention provided they come within the scope of the appended claims and their equivalents.

## Claims

1. A portable display device, comprising:
at least one power input port;
a battery power supply;
an image display region powered by one of the at least one power input port and the battery power supply;
a control system for determining receipt of external power by the at least one power input port and for determining current capacity of the battery power supply; and
a selection system for selecting a run-time period for displaying images within the image display region,
wherein the control system provides a first control signal to the selection system for the selection system to provide a user with a maximum available run-time period based upon the determined receipt of the external power and the determined current capacity of the battery power supply.

2. The device according to claim 1, wherein the control system provides the battery power supply to the image display region when the control system determines that the at least one power input port is not receiving the external power.

3. The device according to claim 2, wherein the selection system displays the maximum available run-time period to the user within the image display region, and the control system determines the maximum available run-time period based upon the current capacity of the battery power supply.

4. The device according to claim 3, wherein the selection system allows the user to select the run-time period including the maximum available run-time period from within the image display region.

5. The device according to claim 3, wherein the control system provides a plurality of second control signals to control performance parameters of the image display region during the selected run-time period.

6. The device according to claim 5, wherein the selection system displays information to the user regarding functional operations of the portable display device during the selected run-time period.

7. The device according to claim 6, wherein the functional operations include one of remaining time of the selected run-time period, the current capacity of the battery power supply, and controlled operational parameters of the image display region.

8. The device according to claim 7, wherein the controlled operational parameters include at least one of brightness, volume, color, tint, and contrast of images displayed within the image display region.

9. The device according to claim 2, wherein the selection system displays information regarding extending the selected run-time period based upon adjustment of controlled operational parameters include at least one of brightness, volume, color, tint, and contrast of images displayed within the image display region.

10. The device according to claim 1, wherein the battery power supply is rechargeable.

11. A method of operating a portable display device, comprising:
powering an image display region by one of at least one power input port and a battery power supply;
determining one of receipt of external power by the at least one power input port and current capacity of the battery power supply; and
selecting a run-time period for displaying images within the image display region,
wherein a user is provided with a display showing a maximum available run-time period based upon the determining one of receipt of external power and current capacity of the battery power supply.

12. The method according to claim 11, further comprising providing the image display region with the battery power supply to the image display region when the at least one power input port does not receive the external power.

13. The method according to claim 12, further comprising displaying the maximum available run-time period to the user within the image display region, wherein the maximum available run-time period is determined based upon the current capacity of the battery power supply, and the user selects the run-time period from within the image display region.

14. The method according to claim 12, further comprising providing a plurality of control signals to control performance parameters of the image display region, the performance parameters include at least one of brightness, volume, color, tint, and contrast of images displayed within the image display region.

15. The method according to claim 12, further comprising displaying information to the user regarding functional operations of the portable display device during the selected run-time period, wherein the functional operations include one of remaining time of the selected run-time period, the current capacity of the battery power supply, and controlled operational parameters of the image display region.

16. The method according to claim 12, further comprising displaying information regarding extending the selected run-time period based upon adjustment of controlled operational parameters include at least one of brightness, volume, color, tint, and contrast of images displayed within the image display region.

17. A method of reducing power consumption of portable display device, comprising:
powering an image display panel with a battery power supply;
determining current capacity of the battery power supply;
selecting a run-time period for displaying images within the image display region based upon the determined current capacity of the battery power supply; and
displaying the selected run-time period within the image display panel.

18. The method according to claim 17, further comprising providing control signals to control at least one of brightness, volume, color, tint, and contrast of images displayed by the image display panel during the selected run-time period.

19. The method according to claim 17, further comprising displaying information to a user regarding one of remaining time of the selected run-time period, the current capacity of the battery power supply, and controlled operational parameters of the image display panel during the selected run-time period, wherein the controlled operational parameters include at least one of brightness, volume, color, tint, and contrast of images displayed within the image display panel.

20. The method according to claim 17, further comprising displaying information regarding extending the selected run-time period based upon adjustment of at least one of brightness, volume, color, tint, and contrast of images displayed within the image display panel.
